(19) Europäisches Patentamt
European Patent Office
Office européen des brevets

(11) **EP 0 994 619 A1**

(12) **EUROPEAN PATENT APPLICATION**

(43) Date of publication:
**19.04.2000 Bulletin 2000/16**

(51) Int. Cl.⁷: **H04N 3/15**, **H04N 5/232**

(21) Application number: **99115476.6**

(22) Date of filing: **05.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **15.10.1998 US 173225**

(71) Applicant:
**Hewlett-Packard Company**
**Palo Alto, California 94304 (US)**

(72) Inventor: **Hofer, Gregory**
**Loveland, CO 80537 (US)**

(74) Representative:
**Schoppe, Fritz, Dipl.-Ing.**
**Schoppe, Zimmermann & Stöckeler**
**Patentanwälte**
**Postfach 71 08 67**
**81458 München (DE)**

(54) **Readout method for sub-area of digital camera image sensor**

(57)     A method for transferring image signals **[115]** from an image sensor **[100]**, specifically from an area image sensor **[100]**, to associated electronics **[320]**. Such a method provides reduced exposure times for automatic image focusing and exposure level specification for digital cameras without modification of the image sensor **[100]**.

FIG. 1

EP 0 994 619 A1

Printed by Xerox (UK) Business Services
2.16.7 (HRS)/3.6

**Description**

FIELD OF THE INVENTION

The present invention relates generally to image sensors, more particularly to techniques for transferring image signals to readout electronics from image sensors, and even more particularly to techniques for transferring image signals to readout electronics from area image sensors, such as charge coupled devices (CCD's) and CMOS image sensors, that are used in non-pixel addressable mode.

BACKGROUND OF THE INVENTION

An image detection system comprises an image sensor to detect the image and readout electronics for collecting the data from that image sensor. Among other techniques, modern image sensors can be fabricated using solid state technologies such as those of Charge Coupled Devices (CCD's) and CMOS. Some image sensors integrate the light incident upon each of its individual elements. For such image sensors, the longer the photosensitive elements are exposed to the image, the stronger the signal obtained. Also for a fixed exposure time in such image sensors, the lower the ambient light, the lower the signal level obtained. The source of the image cannot, of course, move appreciably during the time of the exposure, or the resultant image will be blurred.

Typically, an area image sensor comprises a number of adjacent horizontal rows or lines which are comprised of individual photosensitive detection elements referred to as pixels. The pixels thus ranged detect a two dimensional representation or image of the source of that image.

Image sensors using CCD and CMOS technology are now used in single frame cameras, referred to as digital still cameras (DSC). Such cameras often include capabilities for automatic focus and exposure level adjustment. There are three image sensor readout architectures currently used in commercial DSC's: frame transfer, interline progressive-scan, and interline interlace-scan. Readout of the image from the image sensor depends upon which architecture is used. In a frame transfer image sensor, horizontal lines of pixels are shifted downward into a horizontal readout shift register one line at a time. While in the horizontal readout shift register, the pixels of each line are read out horizontally one pixel at a time into a detection circuit. If the frame transfer image sensor includes additional storage lines, the time required to transfer a frame is increased accordingly.

For an interline progressive-scan image sensor, the readout is performed by first shifting the image data from all pixel photosensitive sites into vertical interline image sensor registers, shifting this data down one line at a time into a horizontal readout register, and finally shifting each line out of the horizontal readout register one pixel at a time into a detection circuit. The process is similar for an interline interlace-scan image sensor, except that only the odd lines or the even lines can be selected at one time to be shifted out of the pixel photosensitive sites into the vertical interline image sensor registers. Two passes are required to read all the image data out of the image sensor. Other image sensors, in particular those not capable of directly addressing specific, individual pixels may have similar architectures.

Automatic focus may require the readout of several images prior to detection of the final, focused image. These added image acquisitions increase the total time the image source needs to remain still in order to obtain a clear image. In addition, a separate image readout to determine the exposure level is needed. Together, these requirements add to the total time required to obtain a single final image.

Previously, focusing, setting exposure level, as well as the detection of the final image have all included the detection of full frames. Typically each frame detected by the image sensor was read out by shifting each row into a readout shift register and then shifting out each pixel in that row, regardless of the sub-region of the image used for focusing and for setting exposure level. This method has the disadvantage of a lengthy time between shutter release and final image capture.

Thus, there is a need for an improved image readout technique to shorten the time required to perform auto-focus and the determination of exposure level in a digital camera.

SUMMARY OF THE INVENTION

In a representative embodiment, the invention provides a readout technique for shortening the time required to perform auto-focus and exposure level determination in a digital camera. No physical changes are necessary to the image sensor. Modification of the camera's electronics selectively reads out the sub-area of the image sensor utilized for determination of an image acquisition parameter such as, but not limited to, focusing and exposure level. Since only a part of the image sensor is read out for each focus and/or exposure level determination, the time necessary to complete that exposure is reduced.

In representative embodiments, the invention is applicable to various types of image sensors including, but not limited to, frame transfer image sensor's, interline progressive-scan image sensor's, interline interlace-scan image sensor's. It is applicable to image sensors fabricated using CCD and CMOS technologies, as well as other image sensors which generally read approximately a full frame instead of reading only signals from specific pixels.

While the term pixel may have various meanings, it is used herein to mean the individual photosensitive elements used for image detection in an image sensor. The pixels are typically located in a two dimensional array comprising a number of adjacent horizontal rows or lines with each line comprised of individual photosensitive detection elements or pixels. The pixels thus arranged detect a two dimensional representation or image of the source of that image.

In a representative embodiment, image signals from rows or lines of photosensitive elements are vertically transferred one at a time into a row readout shift register until the signal from the first row of the sub-area to be used for focus and/or exposure level determination is transferred. The image signals from each of the pixels in that row and all other rows lying within the sub-area of interest are read out until the first pixel lying in the column just past the sub-area of interest is reached. The signals from subsequent pixels in that row are not read out, as they are not from similar pixels in subsequent rows within the sub-area of interest. After the signals from the last row in the sub-area of interest has been read out, the remaining rows outside this area are not shifted into the readout shift register. The time saved in not reading out signals from the various pixels mentioned above reduces the time to perform auto-focusing and/or exposure level determination.

Other aspects and advantages of the present invention will become apparent from the following detailed description, taken in conjunction with the accompanying drawings, illustrating by way of example the principles of the invention.

BRIEF DESCRIPTION OF THE DRAWINGS

The accompanying drawings provide visual representations which will be used to more fully describe the invention and can be used by those skilled in the art to better understand it and its inherent advantages.

FIGURE 1 is a drawing of an image sensor with associated readout devices as described in a representative embodiment of the present patent document.
FIGURE 2A is a drawing of a readout register of an image sensor containing image data as described in a representative embodiment of the present patent document.
FIGURE 2B is another drawing of the readout register of an image sensor containing image data as described in a representative embodiment of the present patent document.
FIGURE 2C is yet another drawing of the readout register of an image sensor containing image data as described in a representative embodiment of the present patent document.
FIGURE 3 is a drawing of an image sensor system as described in a representative embodiment of the present patent document.

BRIEF DESCRIPTION OF THE PREFERRED EMBODIMENT

## 1. Introduction

As shown in the drawings for purposes of illustration, the present patent document relates to methods for reducing the time required for taking a picture with an electronic single frame camera having an image sensor and capabilities for automatic adjustment of an image acquisition parameter such as, but not limited to, exposure level and focus. When reading a frame of the image sensor for focus or exposure adjustment, it is desirable to minimize the readout time in order to improve the overall shutter button to image capture time. Reducing readout times is especially desirable because multiple focus and exposure readouts may be required to acquire one image. Typically in previous systems, focusing, setting exposure level, and the exposure of the final image have each included reading the data from full frames. A frame detected by the image sensor, often a charge coupled device (CCD), was read out by shifting the image signal from each row of sensors in the frame into a readout register and then shifting out the image signal from each pixel of that row, regardless of the sub-area of the image used for focusing and for setting exposure level. In addition, it was often necessary to read out multiple frames in order to set the focus and/or exposure.

While the term pixel may have various meanings, it is used herein to mean the individual photosensitive elements used for image detection in an image sensor. The pixels are typically located in a two dimensional array comprising a number of adjacent horizontal rows or lines with each line comprised of individual photosensitive detection elements or pixels. The pixels thus arranged detect a two dimensional representation or image of the source of that image.

In representative embodiments, the invention is applicable to various types of image sensors including, but not limited to, frame transfer image sensor's, interline progressive-scan image sensor's, interline interlace-scan image sensor's. It is applicable to image sensors fabricated using CCD and CMOS technologies, as well as other image sensors which generally read approximately a full frame instead of reading only signals from specific pixels.

In a preferred embodiment, the methods of the present invention have the advantage of a significant reduction in the time between shutter release and final image capture. A frame transfer image sensor image sensor is used as an example of a representative embodiment. Readout time for an exposure of the image sensor is reduced by reading only a sub-area of the detection frame instead of the full frame. While the representative embodiment utilizes a image sensor in frame transfer mode as the image sensor, other types of image sensors and other modes of transfer may be used in other embodiments to gain enhanced performance.

## 2. Description of Image Sensor Detection Area & Detection Sub-Area

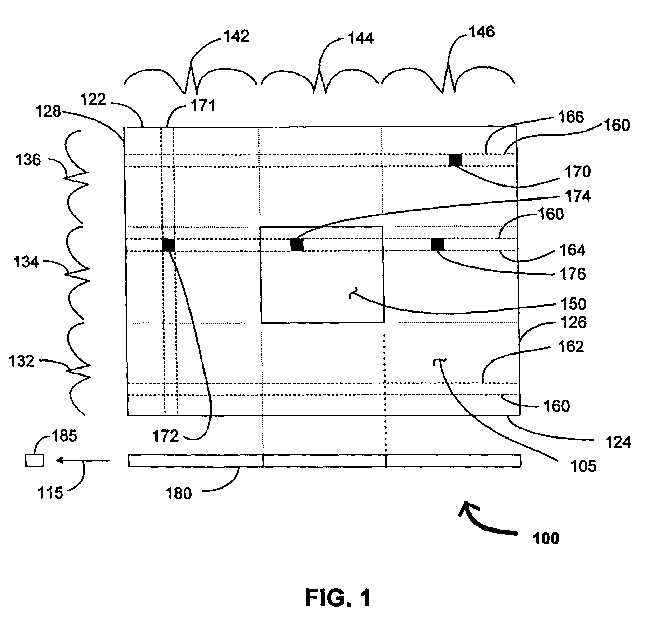

Figure 1 is a drawing of an image sensor **100** having a detection area **105**. In use, an image **110**, not shown in Figure 1, would be focused onto the detection area **105**. The result of this exposure of the image **110** to the detection area **105** is the creation of image signals **115** in each pixel of the detection area **105** which is representative of the image **110**. The image signal **115** is created in the detection area **105** and subsequently transferred to image sensor **100** electronics. Only this transfer to image sensor **100** electronics is show in Figure 1. The detection area **105** is bounded by a top edge **122**, a bottom edge **124**, a right edge **126**, and a left edge **128**. The detection area **105** is conceptually divided vertically into a first-row region **132**, a second-row region **134**, and a third-row region **136**. It is also conceptually divided horizontally into a first-column region **142**, a second-column region **144**, and a third-column region **146**. In a preferred embodiment, only the image signals **115** from a detection sub-area **150** are used in focus and exposure adjustments. The detection sub-area **150** comprises detection elements lying both in the second-row region **134** and the second-column region **144**.

The detection area **105** is comprised of a plurality of detection lines **160**, also referred to herein as rows **160**, which detect the image. For illustrative purposes, only three of the detection lines **160** are shown in Figure 1. The detection lines **160** are comprised of at least one first-row-region-detection line **162** which lies in the first-row region **132**, at least one second-row-region-detection line **164** which lies in the second-row region **134**, and at least one third-row-region-detection line **166** which lies in the third-row region **136**. Each detection line **160**, whether it be first-row-region-detection line **162**, second-row-region-detection line **164**, or third-row-region-detection line **166** is comprised of a plurality of detection pixels **170**, also referred to herein as photosensitive sensor elements **170**, arranged in columns **171** with only one column **171** shown in Figure 1, and has portions lying in the first-column region **142** having at least one first-column-region-detection pixel **172**, the second-column region **144** having at least one second-column-region-detection pixel **174**, and a third-column region **146** having at least one third-column-region-detection pixel **176**.

For illustrative purposes, only one detection pixel **170** in one detection line **160** is shown in Figure 1. First-column-region-detection pixel **172**, second-column-region-detection pixels **174**, and third-column-region-detection pixels **176** are also detection pixels **170**, their distinction being only in the horizontal region of the detection area **105** in which they lie. Again for illustrative purposes, only one first-column-region-detection pixel **172**, one second-column-region-detection pixel **174**, and one third-column-region-detection pixel **176** are shown in Figure 1. During frame detection, the image signals **115** from detection lines **160** are shifted downward one at a time with the bottom line being shifted into a readout register **180**. When in the readout register **180**, image signals **115** from the detection pixels **170** of detection line **160** are shifted out, one pixel at a time, from the readout register **180** into a readout device **185**. Once the image signal **115** from the last pixel has been read out the next detection line **160** can be shifted into the readout register **180**.

In a preferred embodiment, during the adjustment of focus and exposure level only image signals **115** from those detection lines **160** lying in the first-row region **132**, the first-row-region-detection lines **162**, and those detection lines **160** lying in the second-row region **134**, the second-row-region-detection lines **164**, are read into the readout register **180**, and for those particular detection lines **160**, only image signals **115** from those detection pixels **170** lying in the first-column-region **142** and the second-column-region **144** are shifted out from the readout register **180** to a readout device **185**. Only image signals **115** from those pixels lying in both the second-row region **134** and the second-column region **144** are used in focus and exposure adjustments. Other image signals **115** read into readout device **185** are ignored.

## 3. Detection of Image Data

Image signals **115** from detection lines **160** are shifted down at a detection line shift rate $t_i$ until the first detection line **160** of the detection sub-area **150** reaches the readout register **180**. Image signals **115** from detection lines **160** that are shifted into the readout register **180** are read out as described below.

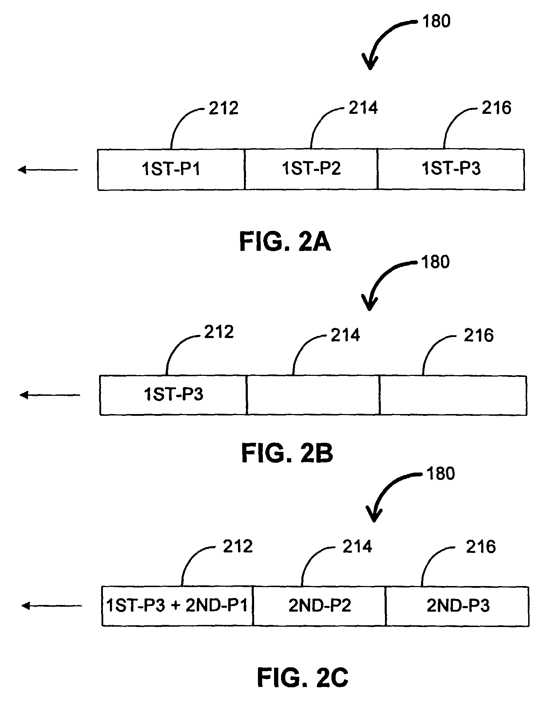

Figure 2A is a drawing of the readout register **180** following transfer of the image signals **115** from the first second-row-region-detection line **164** into the readout register **180**. The readout register **180** is comprised of a first register section **212**, a second register section **214**, and a third register section **216**. Following transfer of image signals **115** from the first second-row-region-detection line **160** in the second-row region **134** into the readout register **180**, image signals **115** from the first-column region **142**, denoted in Figure 2A as 1ST-P1 will be stored in the first register section **212**, image signals **115** from the second-column region **144**, denoted as 1ST-P2, will be stored in the second register section **214**, and image signals **115** from the third-column region **146**, denoted as 1ST-P3, will be stored in the third register section **216**. Image signals **115** from the first-column region **142**, the second-column region **144**, and possibly the third-column region **146** will be transferred one pixel at a time into the readout device **185** until whichever of the following occurs last: (1) the last second-column-region-detection pixel **174** is transferred into the readout device **185** or (2) the last third-column-region-detection pixel **176** is transferred out of the second register section **214**.

Referring now to Figure 2B which is another drawing of the readout register **180**. As shown in Figure 2B, the second register section **214** and the third register section **216** are both empty, while image signals **115** from the third-column region **146**, denoted as 1ST-P3 in Figure 2B, have been transferred into the first register section **212**.

Image signals **115** from the next adjacent second-row-region-detection line **164** is now transferred into the readout register **180**. The contents of the readout register **180** now appears as in Figure 2C which is also a drawing of the readout register **180**. Following transfer of the image signals **115** from the next adjacent second-row-region-detection line **164** into the readout register **180**, image signals **115** from the first-column region **142**, denoted in Figure 2C as 2ND-P1, plus image signals **115** from the third-column region **146** of the previous second-row-region-detection line **164**, denoted as 1ST-P3, will be stored in the first register section **212**; image signals **115** from the second-column region **144** of the next adjacent second-row-region-detection line **164**, denoted as 2ND-P2, will be stored in the second register section **214**; and image signals **115** from the third-column region **146** of the next adjacent second-row-region-detection line **164**, denoted as 2ND-P3, will be stored in the third register section **216**. Image signals **115** from the first-column region **142**, the second-column region **144**, and possibly the third-column region **146** will be transferred one pixel at a time into the readout device **185** until whichever of the following occurs last: (1) the last second-column-region-detection pixel **174** is transferred into the readout device **185** or (2) the last third-column-region-detection pixel **176** is transferred out of the second register section **214**.

Assuming, as an example, that the last second-column-region-detection pixel **174** is transferred into the readout device **185** at or after the last third-column-region-detection pixel **176** is transferred out of the second register section **214**, the first register section **216** in Figure 2C contains a combination of two sets of signal data, 1ST-P3 and 2ND-P1, from two separate but adjacent detection lines **160**. This situation is acceptable in most cases because (1) the data contained in the first register section **212** at the time of transfer is ignored in focus and exposure level adjustments and (2) overflow or bloom should not be a problem, as the capacity of pixels to hold charge from the detection area **105** of an image sensor **100** in the readout register **180** is typically 3 to 5 times that of the detection pixels **170**.

### 4. Definitions of Parameters

This section defines various parameters which are used in the present patent document.

$l_1$ =      The number of first-row-region-detection lines **162**.

$l_2$ =      The number of second-row-region-detection lines **164**.

$l_3$ =      The number of third-row-region-detection lines **166**.

L =      The total number of detection lines **160** in the detection area **105**. Note:

$$L = l_1 + l_2 + l_3$$

$p_1$ =      The number of first-column-region-detection pixels **172** in each detection line **160**.

$p_2$ =      The number of second-column-region-detection pixels **174** in each detection line **160**.

$p_3$ =      The number of third-column-region-detection pixels **176** in each detection line **160**.

P =      The total number of detection pixels **170** in one detection line **160**. Note:

$$P = p_1 + p_2 + p_3$$

$t_i$ =    The line shift time; The time to shift the image signal **115** from one detection line **160** into the adjacent detection line **160**.

$t_p$ =    The pixel shift time; The time to shift the image signal **115** from one detection pixel **170** into the adjacent detection pixel **170**.

$T_F$ =    In a frame transfer image sensor **100**, the time to read out the image signals **115** once from all pixels in the complete detection area **105**.

$T_S$ =    In a frame transfer image sensor **100**, the time to readout the image signals **115** once from all pixels in the detection sub-area **150**.

$T_{SS}$ =    In a frame transfer image sensor **100** wherein the detection subarea **150** is symmetrical about the center of the image sensor **100**, the time to readout the image signals **115** once from all pixels in the detection sub-area **150**.

### 5. Full Detection Area Readout Times

Readout of image signals **115** from the image sensor **100**, can be accomplished using one of several techniques. As a representative example, in a frame transfer image sensor **100**, the detection lines **160** are shifted downward into the readout register **180** one detection line **160** at a time. While in the readout register **180**, the detection pixels **170** of each detection line **160** are read out one detection pixel **170** at a time into a readout device **185**. If **L** is the number of detection lines **160** in the detection area **105**, **P** is the number of detection pixels **170** in a detection line **160**, $t_i$ is the time to shift the image signals **115** down by one detection line **160**, and $t_p$ the time to shift a detection pixel **170** out of the readout register **180**, the time to read out the image signals **115** once from the detection area **105** is

$$T_F = (L \times t_i) + (L \times P \times t_p). \qquad \text{(Eq. 1)}$$

If the frame transfer image sensor described above includes additional storage lines, the value of **L** in this equation is increased accordingly.

For an interline progressive-scan image sensor, the process is similar except that the image signals must first be transferred from the photodetection sites into the vertical interline registers before the data can be shifted down as rows. The time for this extra step is typically negligible compared to the rest of the readout time. The process for an interline interlace-scan image sensor is similar to that of the interline progress-scan image sensor except odd lines are read out first in one readout pass and the even lines are read out last in a second pass. The odd and even lines are later merged in the image processing path.

### 6. Detection Sub-Area Readout Time

Readout of image signals **115** from the detection sub-area **150** of the image sensor **100**, can be accomplished by changing the manner in which the image signals **115** of detection lines **160** and detection pixels **170** are read out by changing control of the output of the image sensor **100**, not the image sensor **100** itself. In a frame transfer image sensor **100**, image signals **115** from each first-row-region detection line **162** are shifted downward into the readout register **180** one detection line **160** at a time.

Then, image signals **115** from each second-row-region detection line **164** are shifted into the readout register **180** one detection line **160** at a time. Image signals **115** from the first-column region **142**, the second-column region **144**, and possibly the third-column region **146** will be transferred one pixel at a time into the readout device **185** until whichever of the following events occurs last: (1) the last second-column-region-detection pixel **174** is transferred into the readout device **185** or (2) the last third-column-region-detection pixel **176** is transferred out of the second register section **214**. Information from pixels read out from other than the second-column-region-detection pixels **174** are discarded. After whichever of the above two events occurs last, the next second-row-region detection line **164** is shifted into the readout register **180**, and image signals **115** from this line are transferred into the readout device **185** as just described.

Image signals **115** we not read out from any detection pixels **170** of any third-row-region-detection lines **166** or from any of the third-column-region-detection pixels **176**. Using the definitions of section 4, the time to read out the image signals **115** once from the detection sub-area **150** including additional associated line and pixel shifts is

$$\mathbf{T_S} = [(\mathbf{l_1} + \mathbf{l_2}) \times \mathbf{t_l}] + [\mathbf{l_2} \times (\mathbf{p_1} + \mathbf{p_2}) \times \mathbf{t_p}] \qquad (\text{Eq. 2})$$

for the condition when the last second-column-region-detection pixel **174** is transferred into the readout device **185** after or when the last third-column-region-detection pixel **176** is transferred out of the second register section **214** or

$$\mathbf{T_S} = [(\mathbf{l_1} + \mathbf{l_2}) \times \mathbf{t_l}] + [\mathbf{l_2} \times (\mathbf{p_3} + \mathbf{p_2}) \times \mathbf{t_p}] \qquad (\text{Eq. 3})$$

for the condition when the last second-column-region-detection pixel **174** is transferred into the readout device **185** before or when the last third-column-region-detection pixel **176** is transferred out of the second register section **214**. Once again, if the frame transfer image sensor described above includes additional storage lines, the value of **L** in this equation is increased accordingly.

For cases wherein the detection sub-area **150** is symmetrical about the center of the detection area **105**, equation 2 becomes

$$\mathbf{T_{SS}} = (\mathbf{L/2} + \mathbf{l_2/2}) \times \mathbf{t_l} + [\mathbf{L/2} \times (\mathbf{P/2} + \mathbf{p_2/2}) \times \mathbf{t_p}] \qquad (\text{Eq. 4})$$

$\mathbf{T_S}$ and $\mathbf{T_{SS}}$ values for interline progressive-scan and interline interlace-scan image sensor's are similar to those given in equations 2 and 3.

**7. Readout Time Reduction**

In a representative example of a preferred embodiment, the detection area **105** is comprised of 1,000 detection lines **160** each having 1300 detection pixels **170**. The detection sub-area **150** comprises 100 second-row-region-detection lines **164** each having 325 second-column-region-detection pixels **174** symmetrically located about the center of the detection area **105**. In this example, $\mathbf{t_i}$, the line shift time is 1 microsecond, and $\mathbf{t_p}$, the pixel shift time is 85 nanoseconds. Using these values in equations 1 and 4 results approximately in $\mathbf{T_F}$ = 0.1115 seconds and $\mathbf{T_{SS}}$ = 0.03508 seconds. Thus, there is a reduction in exposure time of approximately 68.5% for one exposure during focus and exposure level adjustment. As previously stated several exposures may be necessary to adjust focus and exposure level prior to final image exposure.

**8. Image Sensor System**

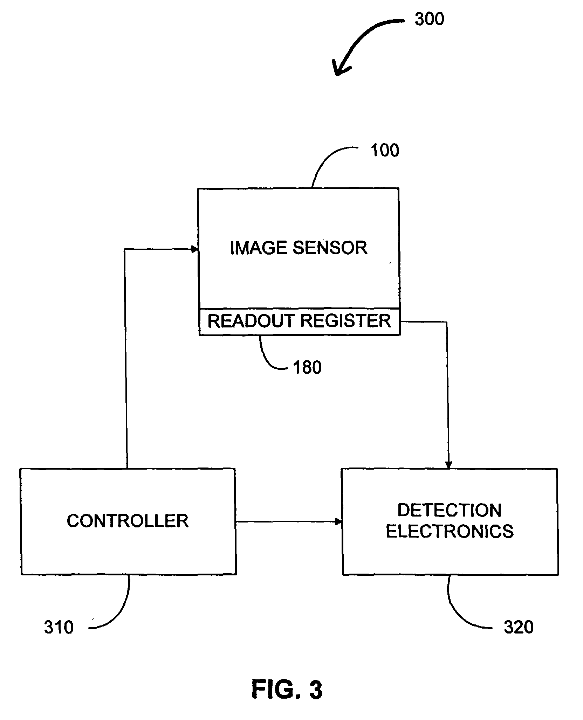

Figure 3 is a drawing of a representative embodiment of an image sensor system **300**. The image sensor system **300** comprises the image sensor **100**, detection electronics **320**, and a controller **310**. The image sensor **100** detects the image and transfers the image signal **115** into the readout register **180** which in this embodiment is shown as a part of the image sensor **100**. It is not, however, required that the readout register **180** be a part of the image sensor **100**. The controller **310** controls the transfer of the image signal **115** from the image sensor **100** to the readout register **180** and then to the detection electronics **320**. The readout device **185** shown in Figure 1, but not shown in Figure 3, could be a part of the detection electronics **320**. In a representative embodiment, the image sensor system **300** could be, for example, a digital camera; and the controller **310** could be a timing generator or programmable sequencer.

In a representative embodiment, the controller **310** would contain the instructions described herein for reading out the image signal **115** from the detection sub-area **150** of the image sensor **100** and detection of the image signal **115** by the detection electronics **320**. These instructions could be either hard wired or programmed into the controller **310**.

**9. Concluding Remarks**

A primary advantage of the embodiment as described in the present patent document over prior methods for automatic focus and exposure level adjustment in image sensors **100** is the ability to reduce the total time required for an exposure including time to adjust the focus and exposure level. Thus, the methods of this patent document have the ability to reduce the length of the total time between shutter release and final image capture.

Although a specific embodiment of the invention has been described and illustrated, the invention is not to be limited to the specific forms or arrangements of parts so described and illustrated. The invention is limited only by the claims.

**Claims**

1.   A method for detecting image signals **[115]** from an image **[110]**, comprising the steps of:

exposing an image sensor **[100]** to the image **[110]**, the image sensor **[100]** having a detection area **[105]** responsive to light from the image **[110]**, wherein the detection area **[105]** has a detection sub-area **[150]** located within the detection area **[105]** and comprises at least one first-row-region-detection line **[162]**, at least one second-row-region-detection line **[164]**, and at least one third-row-region-detection line **[166]**, wherein the second-row-region-detection lines **[164]** are located between the first-row-region-detection lines **[162]** and the third-row-region-detection lines **[166]**; wherein each of the second-row-region-detection lines **[164]** comprises at least one first-column-region-detection pixel **[172]**, at least one second-column-region-detection pixel **[174]**, and at least one third-column-region-detection pixel **[176]**, wherein the second-column-region-detection pixels **[174]** are located between the first-column-region-detection pixels **[172]** and the third-column-region-detection pixels **[176]**; and wherein the detection sub-area **[150]** comprises the second-column-region-detection pixels **[174]** located on the second-row-region-detection lines **[164]**;

shifting the first-row-region-detection lines **[162]**, one at a time, into a readout register **[180]**;

shifting the second-row-region-detection lines **[164]**, one at a time, into the readout register **[180]**; and

while each second-row-region-detection line **[164]** is in the readout register **[180]**, shifting the first-column-region-detection pixels **[172]** and the second-column-region-detection pixels **[174]** out of the readout register **[180]** into a readout device **[185]**.

2.   The method of claim 1 providing the image sensor **[100]** is an area image detector having a mode of readout selected from the group consisting of frame transfer readout, interline progressive-scan readout, and interline interlace-scan readout.

3.   The method of claim 1 providing the image sensor **[100]** is an area image detector having a fabrication technology selected from the group consisting of charge coupled device technology and CMOS device technology.

4.   A controller **[310]**, tangibly embodying a program of instructions executable by the controller to perform method steps for detecting image signals **[115]** from an image **[110]**, said steps comprising:

exposing an image sensor **[100]** to the image **[110]**, the image sensor **[100]** having a detection area **[105]** responsive to light from the image **[110]**, wherein the detection area **[105]** has a detection sub-area **[150]** located within the detection area **[105]** and comprises at least one first-row-region-detection line **[162]**, at least one second-row-region-detection line **[164]**, and at least one third-row-region-detection line **[166]**, wherein the second-row-region-detection lines **[164]** are located between the first-row-region-detection lines **[162]** and the third-row-region-detection lines **[166]**; wherein each of the second-row-region-detection lines **[164]** comprises at least one first-column-region-detection pixel **[172]**, at least one second-column-region-detection pixel **[174]**, and at least one third-column-region-detection pixel **[176]**, wherein the second-column-region-detection pixels **[174]** are located between the first-column-region-detection pixels **[172]** and the third-column-region-detection pixels **[176]**; and wherein the detection sub-area **[150]** comprises the second-column-region-detection pixels **[174]** located on the second-row-region-detection lines **[164]**;

shifting the first-row-region-detection lines **[162]**, one at a time, into a readout register **[180]**;

shifting the second-row-region-detection lines **[164]**, one at a time, into the readout register **[180]**; and

while each second-row-region-detection line **[164]** is in the readout register **[180]**, shifting the first-column-region-detection pixels **[172]** and the second-column-region-detection pixels **[174]** out of the readout register **[180]** into a readout device **[185]**.

5. The controller **[310]** of claim 4 providing the image sensor **[100]** is an area image detector having a mode of readout selected from the group consisting of frame transfer readout interline progressive-scan readout, and interline interlace-scan readout.

6. The controller **[310]** of claim 4 providing the image sensor **[100]** is an area image detector having a fabrication technology selected from the group consisting of charge coupled device technology and CMOS device technology.

7. An image sensor system **[300]** for detecting image signals **[115]** from an image **[110]**, comprising:

an image sensor **[100]** for detecting the image **[110]**;

detection electronics **[320]** for detecting image signals from the image sensor, the detection electronics **[320]** connected to the image sensor **[100]**; and

a controller **[310]**, wherein the controller **[310]** is connected to the image sensor **[100]** and the detection electronics **[320]**, containing:

instructions for

exposing an image sensor **[100]** to the image **[110]**, the image sensor **[100]** having a detection area **[105]** responsive to light from the image **[110]**, wherein the detection area **[105]** has a detection sub-area **[150]** located within the detection area **[105]** and comprises at least one first-row-region-detection line **[162]**, at least one second-row-region-detection line **[164]**, and at least one third-row-region-detection line **[166]**, wherein the second-row-region-detection lines **[164]** are located between the first-row-region-detection lines **[162]** and the third-row-region-detection lines **[166]**; wherein each of the second-row-region-detection lines **[164]** comprises at least one first-column-region-detection pixel **[172]**, at least one second-column-region-detection pixel **[174]**, and at least one third-column-region-detection pixel **[176]**, wherein the second-column-region-detection pixels **[174]** are located between the first-column-region-detection pixels **[172]** and the third-column-region-detection pixels **[176]**; and wherein the detection sub-area **[150]** comprises the second-column-region-detection pixels **[174]** located on the second-row-region-detection lines **[164]**;

shifting the first-row-region-detection lines **[162]**, one at a time, into a readout register **[180]**;

shifting the second-row-region-detection lines **[164]**, one at a time, into the readout register **[180]**; and

while each second-row-region-detection line **[164]** is in the readout register **[180]**, shifting the first-column-region-detection pixels **[172]** and the second-column-region-detection pixels **[174]** out of the readout register **[180]** into a readout device **[185]**; and

a processor for running the computer program.

8. The image sensor system **[300]** of claim 7 providing the image sensor **[100]** is an area image detector having a mode of readout selected from the group consisting of frame transfer readout, interline progressive-scan readout, and interline interlace-scan readout.

9. The image sensor system **[300]** of claim 7 providing the image sensor **[100]** is an area image detector having a fabrication technology selected from the group consisting of charge coupled device technology and CMOS device technology.

FIG. 1

FIG. 2A

FIG. 2B

FIG. 2C

300

100

IMAGE SENSOR

READOUT REGISTER

180

CONTROLLER

DETECTION
ELECTRONICS

310

320

**FIG. 3**

**European Patent Office**

## EUROPEAN SEARCH REPORT

Application Number

EP 99 11 5476

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 689 686 A (HASHIMOTO SEIJI ET AL) 25 August 1987 (1987-08-25) * column 1, line 31 - line 55 * * column 6, line 36 - line 54 * * column 7, line 9 - line 25 * --- | 1,2,4,7 | H04N3/15 H04N5/232 |
| X | EP 0 178 954 A (SFIM) 23 April 1986 (1986-04-23) * page 8, line 24 - page 10, line 5; figure 1 * --- | 1,4,7 | |
| A | US 5 363 137 A (SUGA AKIRA ET AL) 8 November 1994 (1994-11-08) * column 1, line 32 - line 60 * * column 6, line 58 - column 7, line 13; figure 10 * --- | 1,4,7 | |
| A | US 5 253 071 A (MACKAY MICHAEL T) 12 October 1993 (1993-10-12) * column 10, line 24 - column 11, line 31; figure 7 * --- | 1,4,7 | TECHNICAL FIELDS SEARCHED (Int.Cl.7) |
| A | EP 0 809 395 A (EASTMAN KODAK CO) 26 November 1997 (1997-11-26) * column 1, line 37 - line 51; figure 3 * ----- | 3 | H04N |

The present search report has been drawn up for all claims

| Place of search | Date of completion of the search | Examiner |
|---|---|---|
| THE HAGUE | 7 September 1999 | Bequet, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)